# EUROPEAN PATENT APPLICATION

(11) **EP 2 937 524 A1**
(43) Date of publication of application: **28.10.2015**
(21) Application number: 15164897.9
(22) Date of filing: 23.04.2015
(51) Int. Cl.: F01D 25/16, F02C 7/28

(54) **GAS TURBINE ENGINE AND BUFFER SYSTEM THEREFOR**

(30) Priority: 24.04.2014 US 201461983519 P
(71) Applicant: United Technologies Corporation, Hartford, CT 06101 (US)
(72) Inventor: SPAGNOLETTI, Anthony, Newington, CT Connecticut 06111 (US)
(74) Representative: Leckey, David Herbert

(57) **Abstract**

The present disclosure relates generally to a buffer vent system (100) for a gas turbine engine. A supply of auxiliary pressurized gas (106) is supplied to the buffer vent system (100) during engine start during a period of time when the compressor section (102) of the gas turbine engine is not able to supply adequate pressurized air to the buffer vent system (100).

## Description

### TECHNICAL FIELD OF THE DISCLOSURE

The present disclosure is generally related to gas turbine engines and, more specifically, to a buffer system for a gas turbine engine.

### BACKGROUND OF THE DISCLOSURE

In gas turbine engines, it is known to use seals that are seated by means of maintaining a pressure differential across the seal such that the higher pressure on one side of the seal acts to seat the other side of the seal against a surface. A buffer system is provided that routes high pressure air from the engine's compressor section to the area behind the seal to maintain positive pressure on the seal. When the engine is being started and for a short time thereafter, such high pressure air is not available from the compressor section, resulting in loss of performance of the seal.

### SUMMARY OF THE DISCLOSURE

In one embodiment, an air system for a gas turbine engine is disclosed comprising: a buffer vent system; one or more air lines coupled to the buffer vent system for supplying pressurized air to the buffer vent system; and a supply of auxiliary pressurized gas, ancillary to a compressor section, and operatively coupled to the buffer vent system for supplying the auxiliary pressurized gas to the buffer vent system.

In a further embodiment of the above, the one or more air lines comprise a plurality of air lines.

In a further embodiment of any of the above, the supply of auxiliary pressurized gas is coupled to the one or more air lines.

In a further embodiment of any of the above, a metering orifice is disposed between the supply of auxiliary pressurized gas and the buffer vent system.

In a further embodiment of any of the above, a check valve is disposed between the supply of auxiliary pressurized gas and the buffer vent system.

In a further embodiment of any of the above, the auxiliary pressurized gas comprises air.

In a further embodiment of any of the above, the auxiliary pressurized gas comprises nitrogen.

In a further embodiment of any of the above, the supply of auxiliary pressurized gas comprises a starter valve.

In a further embodiment of any of the above, the starter valve receives pressurized gas from a component selected from the group consisting of: an auxiliary power unit, a ground cart, and an engine test stand.

In a further embodiment of any of the above, a compressor section is coupled to the one or more air lines for supplying pressurized air to the buffer vent system.

In another embodiment, a gas turbine engine is disclosed comprising: a compressor section; a buffer vent system; one or more air lines coupled to the compressor section and the buffer vent system for supplying pressurized air from the compressor section to the buffer vent system; and a supply of auxiliary pressurized gas operatively coupled to the buffer vent system for supplying the auxiliary pressurized gas to the buffer vent system.

In a further embodiment of the above, the one or more air lines comprise a plurality of air lines.

In a further embodiment of any of the above, the supply of auxiliary pressurized gas is coupled to the one or more air lines.

In a further embodiment of any of the above, a metering orifice is disposed between the supply of auxiliary pressurized gas and the buffer vent system.

In a further embodiment of any of the above, a check valve is disposed between the supply of auxiliary pressurized gas and the buffer vent system.

In a further embodiment of any of the above, the auxiliary pressurized gas comprises air.

In a further embodiment of any of the above, the auxiliary pressurized gas comprises nitrogen.

In a further embodiment of any of the above, the supply of auxiliary pressurized gas comprises a starter valve.

In a further embodiment of any of the above, the starter valve receives pressurized gas from a component selected from the group consisting of: an auxiliary power unit, a ground cart, and an engine test stand.

Other embodiments are also disclosed.

### BRIEF DESCRIPTION OF THE DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:
FIG. 1 is a schematic partial cross-sectional view of a gas turbine engine in an embodiment.
FIG. 2 is a schematic block diagram of a gas turbine engine buffer system in an embodiment.
FIG. 3 is a schematic block diagram of a gas turbine engine buffer system in an embodiment.

### DETAILED DESCRIPTION OF THE DISCLOSED EMBODIMENTS

For the purposes of promoting an understanding of the principles of the invention, reference will now be made to certain embodiments and specific language will be used to describe the same. It will nevertheless be understood that no limitation of the scope of the invention is thereby intended, and alterations and modifications in the illustrated device, and further applications of the principles of the invention as illustrated therein are herein contemplated as would normally occur to one skilled in the art to which the invention relates.

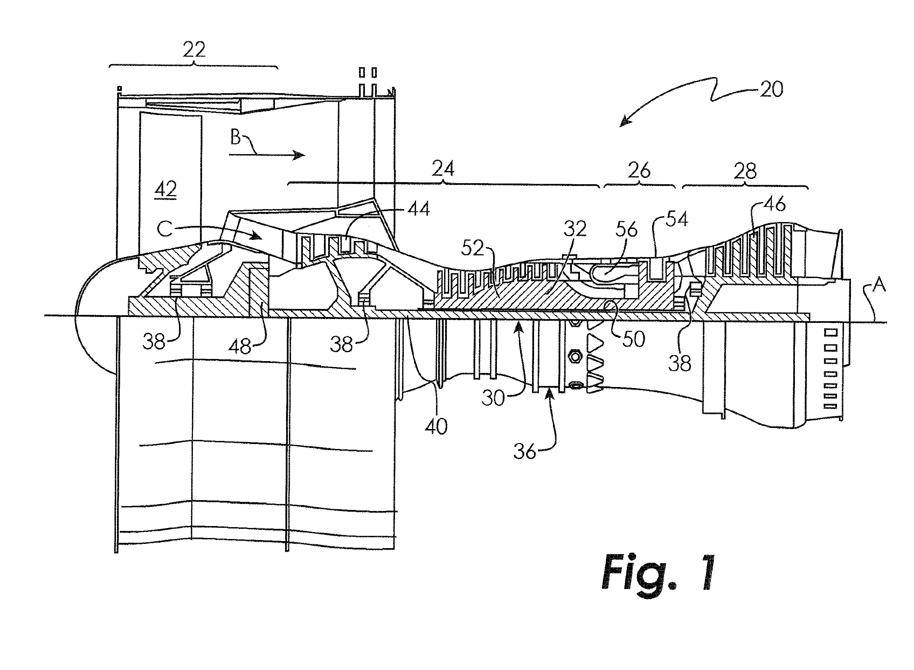

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,688 meters). The flight condition of 0.8 Mach and 35,000 ft (10,688 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/sec).

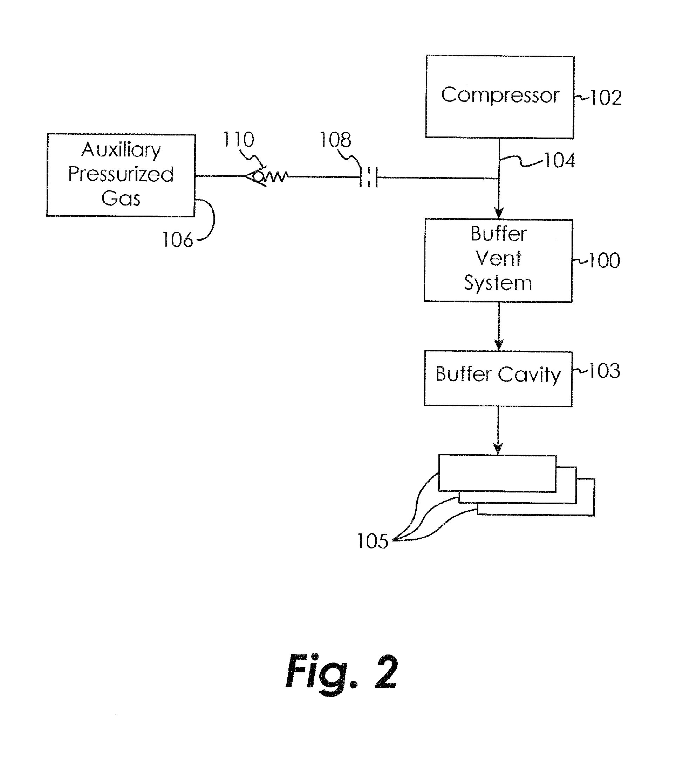

As discussed above, gas turbine engines may use seals that are seated by means of maintaining a pressure differential across the seal such that the higher pressure on one side of the seal acts to seat the other side of the seal against a surface. A buffer system is provided that routes high pressure air from the engine's compressor section to the area behind the seal to maintain positive pressure on the seal. When the engine is being started and for a short time thereafter, such high pressure air is not available from the compressor section, resulting in loss of performance of the seal. FIG. 2 schematically illustrates a gas turbine engine buffer vent system in an embodiment. A buffer vent system 100 receives high pressure air from the gas turbine engine compressor section 102 through one or more air lines 104. The one or more air lines 104 comprise a plurality of air lines in an embodiment. The buffer vent system 100 provides the high pressure air to one or more buffer cavities 103 behind one or more seals 105. There are many ways for buffer vent system 100 to provide high pressure air to the one or more buffer cavities 103. As discussed above, when the engine is being started and for a short time thereafter, such high pressure air is not available from the compressor section 102, resulting in loss of performance of the seal 105. In order to mitigate the unavailability of pressurized air from the compressor section 102, a supply of auxiliary pressurized gas 106, which is ancillary to the compressor section 102, is coupled to one or more air lines 104 in an embodiment so that it may be provided to the buffer vent system 100 at least during the time that compressor section 102 is not providing an adequate supply of pressurized air. In another embodiment, the auxiliary pressurized gas 106 is coupled to the buffer vent system 100 without using the one or more air lines 104.

The auxiliary pressurized gas 106 may be provided in an embodiment to the buffer vent system 100 through a metering orifice 108 to measure the gas flow. A check valve 110 may also be provided in an embodiment to prevent flow of pressurized air from the compressor section 102 back to the supply of auxiliary pressurized gas 106. The auxiliary pressurized gas 106 comprises air in an embodiment, but may also comprise any desired gas such as nitrogen.

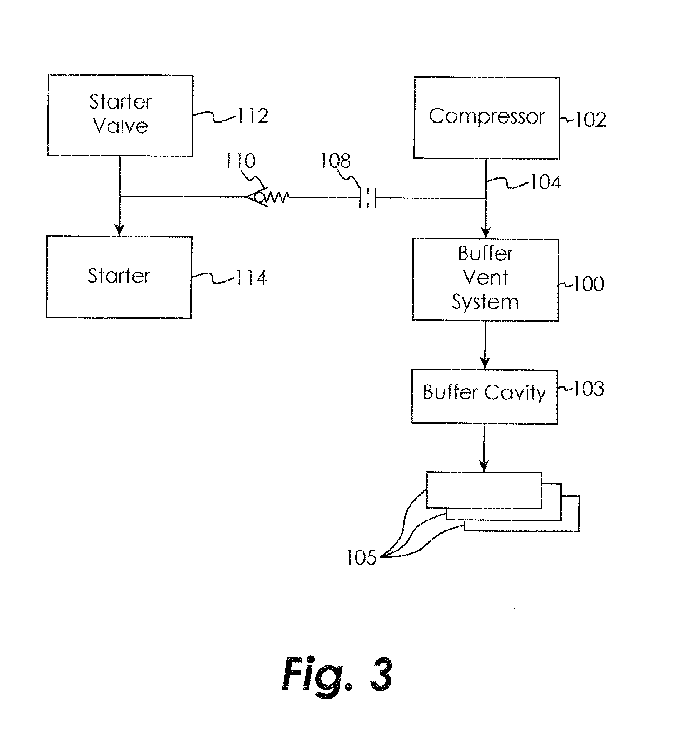

As shown in FIG. 3, the auxiliary pressurized gas used to supply the buffer vent system 100 may be sourced from the starter valve 112 of the gas turbine engine. The starter valve 112 supplies pressurized gas to the starter 114 during the engine start operation. The pressurized gas is supplied to the starter valve 112 from any convenient source, such as from an auxiliary power unit (APU), a ground cart used to start the engine, or a test stand if the engine is being tested, to name just three non-limiting examples. The auxiliary pressurized gas comprises air in an embodiment.

While the invention has been illustrated and described in detail in the drawings and foregoing description, the same is to be considered as illustrative and not restrictive in character, it being understood that only certain embodiments have been shown and described and that all changes and modifications that come within the spirit of the invention are desired to be protected.

## Claims

1. An air system for a gas turbine engine comprising:
a buffer vent system (100);
one or more air lines (104) coupled to the buffer vent system (100) for supplying pressurized air to the buffer vent system (100); and
a supply of auxiliary pressurized gas (106), ancillary to a compressor section (102), and operatively coupled to the buffer vent system (100) for supplying the auxiliary pressurized gas to the buffer vent system (100).

2. The air system of claim 1, wherein the one or more air lines (104) comprise a plurality of air lines.

3. The air system of claim 1 or 2, wherein the supply of auxiliary pressurized gas (106) is coupled to the one or more air lines (104).

4. The air system of claim 1, 2 or 3, further comprising a metering orifice (108) disposed between the supply of auxiliary pressurized gas (106) and the buffer vent system (100).

5. The air system of any preceding claim, further comprising a check valve (110) disposed between the supply of auxiliary pressurized gas (106) and the buffer vent system (100).

6. The air system of any preceding claim, wherein the auxiliary pressurized gas comprises air.

7. The air system of any preceding claim, wherein the auxiliary pressurized gas comprises nitrogen.

8. The air system of any preceding claim, wherein the supply of auxiliary pressurized gas (106) comprises a starter valve (112).

9. The air system of claim 8, wherein the starter valve (112) receives pressurized gas from a component selected from the group consisting of: an auxiliary power unit, a ground cart, and an engine test stand.

10. The air system of any preceding claim, further comprising a compressor section (102) coupled to the one or more air lines (104) for supplying pressurized air to the buffer vent system (100).

11. A gas turbine engine comprising:
a compressor section (102);
the air system of any preceding claim;
wherein the one or more air lines (104) are coupled to the compressor section (102) and the buffer vent system (100) for supplying pressurized air from the compressor section (102) to the buffer vent system (100).
